# EUROPEAN PATENT SPECIFICATION

(11) **EP 3 563 653 B1**
(45) Date of publication and mention of the grant of the patent: **16.08.2023**
(21) Application number: 17888059.7
(22) Date of filing: 23.11.2017
(51) Int. Cl.: E02F 9/08, A01B 59/06, B62D 21/18

(54) **FRAME DEVICE FOR AGRICULTURAL WORK VEHICLE**
RAHMENVORRICHTUNG FÜR EIN LANDWIRTSCHAFTLICHES ARBEITSFAHRZEUG
DISPOSITIF DE CHASSIS POUR ENGIN AGRICOLE

(30) Priority: 27.12.2016 KR 20160179651; 27.12.2016 KR 20160179655; 16.10.2017 KR 20170133736; 16.10.2017 KR 20170133740
(43) Date of publication of application: 06.11.2019
(73) Proprietor: LS Mtron Ltd., Anyang-si, Gyeonggi-do 14119 (KR)
(72) Inventor: SEO, Yong Min, Anyang-si Gyeonggi-do 14119 (KR); PARK, Young Gil, Anyang-si Gyeonggi-do 14119 (KR)
(74) Representative: K&L Gates LLP
(86) International application number: PCT/KR2017/013398
(87) International publication number: WO 2018/124490

(56) References cited:
- JP-A- 2009 022 290
- KR-A- 20160 038 574
- KR-B1- 0 175 157
- KR-B1- 101 102 516
- KR-B1- 101 482 546
- US-A- 6 056 502
- US-A1- 2003 099 534
- US-B2- 6 729 431

## Description

### [Technical Field]

The present invention relates to an agricultural work vehicle used to cultivate crops required for human life using soil.

### [Background Art]

Agricultural work vehicles are used to cultivate crops required for human life using soil. For example, combines, tractors, and the like belong to the agricultural work vehicles. A combine serves to reap and thresh crops such as rice, barley, wheat, beans, and the like. A tractor uses a traction force to perform processes required for cultivating the crops.

Such agricultural work vehicles are implemented to perform a wider range of processes by mounting working machines. For example, working machines such as a loader working machine, a backhoe working machine, and the like may be mounted on the agricultural work vehicle. The loader working machine is used to remove or deliver soil, and may be mounted so that the loader working machine is arranged in front of the agricultural work vehicle. The backhoe working machine is used to perform an excavation process, and may be mounted so that the backhoe working machine is arranged behind the agricultural work vehicle.

Here, an agricultural work vehicle according to the prior art is configured to have a structure in which a loader working machine is mounted on an engine frame so that the loader working machine is arranged in front of the engine frame, and a backhoe working machine is also mounted on the engine frame so that the backhoe working machine is arranged behind the engine frame. That is, the agricultural work vehicle according to the prior art is configured to have a structure in which both the loader working machine and the backhoe working machine are mounted on the engine frame. Therefore, the agricultural work vehicle according to the prior art has the following problems.

First, the agricultural work vehicle according to the prior art has a structure in which a significant magnitude of a load is inevitably exerted on the engine frame because both the loader working machine and the backhoe working machine are mounted on the engine frame. Therefore, the agricultural work vehicle according to the prior art has a drawback in that the engine frame may be deformed or the engine frame may be damaged and broken.

Second, there is an alternative measure for enhancing the strength of the engine frame so that the engine frame can have a supporting force to support both the loader working machine and the backhoe working machine. However, according to the alternative measure, because the weight of the engine frame increases with an increase in strength of the engine frame, the agricultural work vehicle according to the prior art is managed in a state in which the agricultural work vehicle is provided with the engine frame with excessive weight even when only one of the working machines such as the loader working machine and the backhoe working machine is mounted on the engine frame. Therefore, the agricultural work vehicle according to the prior art has a problem in that an unnecessary increase in the total weight of the agricultural work vehicle may be caused due to the engine frame, resulting in reduced fuel economy, and the like.

Document 1 (US 6 729 431 B2), which forms the basis for the preamble of the independent claim, discloses a frame type tractor having an engine mounted in a front region of a main frame extending longitudinally of a tractor body, and a transmission case mounted in a rear region of the main frame, in which a backhoe mounting frame is attached to a rear end of the main frame, rollover protection system mounts are arranged in upper portions of the backhoe mounting frame for fixedly supporting a rollover protection system, the backhoe mounting frame has a frame structure defining an inside space therein and including a pair of right and left side walls, a top wall interconnecting upper ends of the side walls, and a bottom wall interconnecting lower ends of the side walls, and the right and left side walls have the rollover protection system mounts and backhoe attaching portions for engaging and connecting a backhoe unit.

Document 2 (US 6 056 502 A) discloses a reinforcing frame structure for coupling a front loader to a front region of a tractor body and a working implement to a rear region thereof, in which the reinforcing frame structure includes right and left frames arranged laterally of the tractor body and extending longitudinally thereof, a first cross bar for rigidly interconnecting the right and left frames in rearward positions thereof, a rear connecting mechanism formed integrally with the rearward positions of the right and left frames to be connectable to a rear axle case of the tractor body from below, a working implement coupling mechanism for coupling the working implement, a loader coupling mechanism for coupling the front loader, and a front connecting mechanism for connecting forward regions of the right and left frames to the tractor body, and the rear connecting mechanism includes a holding mechanism for holding opposite ends of the rear axile case, whereby the reinforcing frame structure is attachable to and detachable from the tractor body from below.

### [Disclosure]

### [Technical Problem]

Therefore, the present invention is designed to solve the problems and is for providing a frame device for agricultural work vehicle capable of reducing deformation in an engine frame due to a load exerted by working machines.

The present invention is for providing a frame device for agricultural work vehicle capable of reducing a degree of increase in weight exerted on the engine frame in order to achieve a supporting force for the working machines.

### [Technical Solution]

To solve the above problems, the present invention provides a frame device for agricultural work vehicle according to appended claim 1.

A frame device for agricultural work vehicle according to the present invention includes an engine frame configured to support an engine of an agricultural work vehicle; a protection frame connected to each of a protection unit configured to protect a driver's seat in the agricultural work vehicle and the engine frame to support the protection unit; and a rear frame connected to each of a rear working machine and the engine frame to support the rear working machine mounted at the rear of the agricultural work vehicle. The protection frame includes a protective connection member connected to the engine frame. Each of the plurality of rear frames may include a rear connection member connected to the engine frame. The protective connection member and the rear connection member are disposed to overlap each other so that the protective connection member and the rear connection member are detachably connected to the engine frame and regions of the rear connection member and the protective connection member which are connected to the engine frame are implemented as a support structure consisting of three parts.

### [Advantageous Effects]

According to the present invention, the frame device for agricultural work vehicle may have the following effects.

Because the present invention is implemented to share a load exerted by working machines in order to support the working machines, deformation in the engine frame can be reduced, and the engine frame can be prevented from being damaged and broken. Therefore, the frame device for agricultural work vehicle can contribute to enhancing the durability of an agricultural work vehicle.

Because the present invention is implemented to reduce a degree of increase in weight exerted on the engine frame in order to achieve a supporting force for the working machines, the frame device for agricultural work vehicle can contribute to improving the fuel economy of the agricultural work vehicle, and can also contribute to maintaining the overall balance of the agricultural work vehicle.

### [Description of Drawings]

FIG. 1 is a schematic perspective view showing one example of an agricultural work vehicle in which a frame device for agricultural work vehicle according to the present invention is installed.
FIG. 2 is a schematic perspective view showing a configuration in which a frame device for agricultural work vehicle according to an embodiment which is not part of the present invention supports a front working machine.
FIG. 3 is a schematic perspective view of a front frame in the frame device for agricultural work vehicle according to said embodiment which is not part of the present invention.
FIG. 4 is a schematic top cross-sectional view showing a configuration in which the front frame is connected to a front working machine and an engine frame in the frame device for agricultural work vehicle according to said embodiment which is not part of the present invention.
FIG. 5 is an enlarged diagram of a cross section I in FIG. 4.
FIG. 6 is a schematic perspective view of a rear frame in the frame device for agricultural work vehicle according to said embodiment which is not part of the present invention.
FIG. 7 is a schematic perspective view showing a configuration in which the frame device for agricultural work vehicle according to said embodiment which is not part of the present invention supports a front working machine and a rear working machine.
FIG. 8 is a schematic perspective view of the front frame and the rear frame in the frame device for agricultural work vehicle according to said embodiment which is not part of the present invention.
FIGS. 9 and 10 are schematic top cross-sectional views for explaining a connection relationship between the front frame, the rear frame and the engine frame in the frame device for agricultural work vehicle according to said embodiment which is not part of the present invention.
FIG. 11 is a schematic perspective view showing a configuration in which a frame device for agricultural work vehicle according to an embodiment of the present invention supports a rear working machine.
FIG. 12 is a schematic perspective view of the frame device for agricultural work vehicle according to said embodiment of the present invention.
FIG. 13 is a schematic top cross-sectional view for explaining a connection relationship between a protection frame and an engine frame in the frame device for agricultural work vehicle according to said embodiment of the present invention.
FIG. 14 is a schematic top cross-sectional view for explaining a connection relationship between the protection frame, a rear frame and the engine frame in the frame device for agricultural work vehicle according to said embodiment of the present invention.
FIG. 15 is a schematic partial top plan view for explaining a connection relationship between the protection frame, the rear frame and the engine frame in the frame device for agricultural work vehicle according to said embodiment of the present invention.
FIG. 16 is a schematic partial plan view for explaining a connection relationship between the rear frame, the protection frame, a front frame and the engine frame in the frame device for agricultural work vehicle according to said embodiment of the present invention.

### [Mode for Invention]

Hereinafter, said embodiment which is not part of the present invention and the embodiment of the frame device for agricultural work vehicle according to the present invention will be sequentially described with reference to the accompanying drawings.

### <Embodiment which is not part of the present invention>

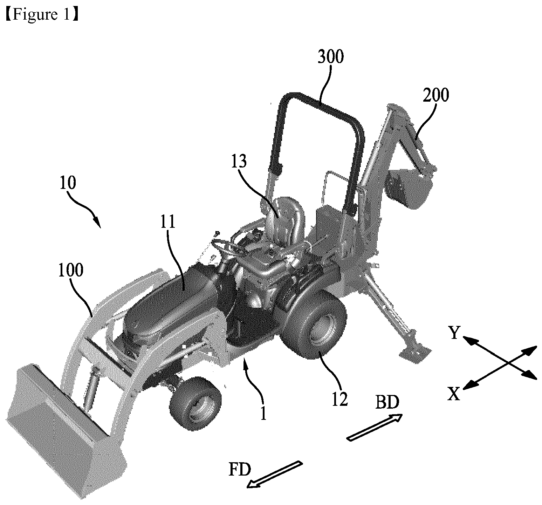

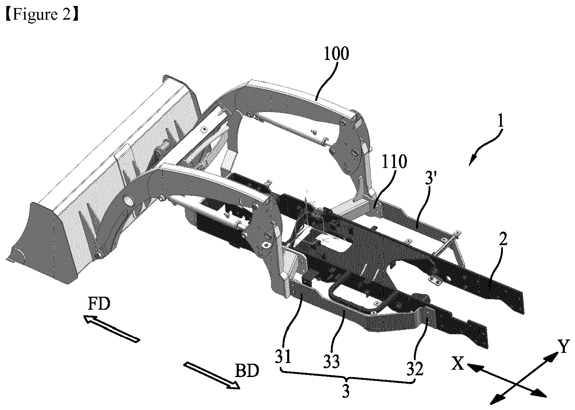

Referring to FIGS. 1 and 2, a frame device 1 for agricultural work vehicle according to said embodiment which is not part of the present invention is installed in an agricultural work vehicle 10. The agricultural work vehicle 10 is used to cultivate crops required for human life using soil. The agricultural work vehicle 10 may include a tractor, a combine, and the like.

The frame device 1 for agricultural work vehicle according to said embodiment not part of the present invention may include an engine frame 2 configured to support an engine (not shown), a front frame 3 connected to each of a front working machine 100 and the engine frame 2 to support the front working machine 100 mounted on the agricultural work vehicle 10, and a rear frame 4 connected to each of a rear working machine 200 and the engine frame 2 to support the rear working machine 200 mounted on the agricultural work vehicle 10. Each of the front frame 3 and the rear frame 4 may be detachably connected to the engine frame 2.

Therefore, the frame device 1 for agricultural work vehicle according to said embodiment not part of the present invention may have the following operational effects.

First, the frame device 1 for agricultural work vehicle is implemented so that the engine frame 2, the front frame 3 and the rear frame 4 share a load exerted by the front working machine 100 and the rear working machine 200 in order to support the front working machine 100 and the rear working machine 200. Accordingly, the frame device 1 for agricultural work vehicle according to said embodiment not part of the present invention may reduce deformation in the engine frame 2, and may also prevent the engine frame 2 from being damaged and broken. Therefore, the frame device 1 for agricultural work vehicle according to said embodiment not part of the present invention may contribute to enhancing the durability of the agricultural work vehicle 10.

Second, the frame device 1 for agricultural work vehicle according to said embodiment not part of the present invention is implemented to reduce a degree of increase in weight exerted on the engine frame 2 in order to achieve a supporting force to support the front working machine 100 and the rear working machine 200. When both the front working machine 100 and the rear working machine 200 are mounted on the agricultural work vehicle 10, the front frame 3 and the rear frame 4 connected to the engine frame 2 share a load exerted by the front working machine 100 and the rear working machine 200 in order to support the front working machine 100 and the rear working machine 200. Also, when only the front working machine 100 is mounted on the agricultural work vehicle 10, the front frame 3 connected to the engine frame 2 may share a load exerted by the front working machine 100 in order to support the front working machine 100. In this case, when the rear frame 4 is detached from the engine frame 2, only the front frame 3 may be connected to the engine frame 2, as shown in FIG. 2.

Therefore, the frame device 1 for agricultural work vehicle according to said embodiment not part of the present invention may provide a sufficient supporting force to support the front working machine 100 and the rear working machine 200 using the front frame 3 and the rear frame 4 by reducing an increase in weight of the engine frame 2 or without increasing the weight of the engine frame 2. Also, when only the front working machine 100 is mounted on the agricultural work vehicle 10, the frame device 1 for agricultural work vehicle according said embodiment not part of the present invention is implemented to reduce the total weight of the engine frame 2 by detachment of the rear frame 4. Therefore, the frame device 1 for agricultural work vehicle according to said embodiment not part of the present invention may contribute to improving the fuel economy of the agricultural work vehicle 10 by preventing the fuel economy of the agricultural work vehicle 10 from being reduced due to an unnecessary increase in the total weight of the engine frame 2. Also, the frame device 1 for agricultural work vehicle according said embodiment not part of the present invention may contribute to maintaining the overall balance of the agricultural work vehicle 10 by means of the front frame 3 and the rear frame 4.

Hereinafter, the engine frame 2, the front frame 3, and the rear frame 4 in the frame device 1 for agricultural work vehicle according to said embodiment not part of the present invention will be described in detail with reference to the accompanying drawings.

Referring to FIGS. 1 and 2, the engine frame 2 is configured to support the engine. The engine frame 2 may be installed in a vehicle body 11 of the agricultural work vehicle 10. The engine frame 2 may support machinery installed in the vehicle body 11 and the vehicle body 11 as well as the engine. That is, the engine frame 2 may function as a framework of the agricultural work vehicle 10. Wheels 12 may be installed at the vehicle body 11. As a driving force generated by the engine is transferred to the wheels 12, the vehicle body 11 may move in a traveling direction (an X-axis direction). In this case, the traveling direction (an X-axis direction) may be a parallel axial direction with respect to a forward direction in which the vehicle body 11 moves forward (a FD arrow direction), and a backward direction in which the vehicle body 11 moves backward (a BD arrow direction). A driver's seat 13 configured to allow a driver to be seated may be provided in the vehicle body 11. As the driver sits in the driver's seat 13 to handle a steering device, an operating device, and the like, the agricultural work vehicle 10 may perform a predetermined operation. Although not shown, a transmission configured to connect the engine and the wheels 12 may be installed at the engine frame 2.

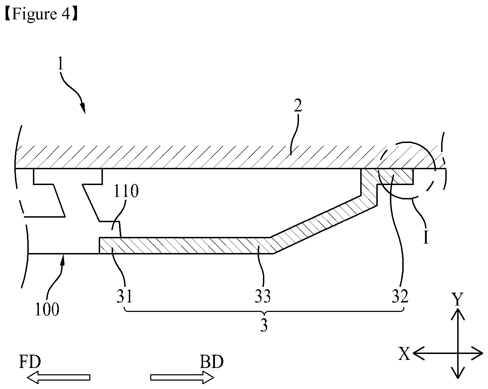

Referring to FIGS. 1 to 5, the front frame 3 is configured to support the front working machine 100 mounted on the agricultural work vehicle 10. The front frame 3 may be connected to each of the front working machine 100 and the engine frame 2. Accordingly, the front frame 3 and the engine frame 2 may share a load exerted by the front working machine 100 in order to support the front working machine 100. Therefore, the frame device 1 for agricultural work vehicle according to said embodiment not part of the present invention may be implemented to reduce an increase in weight of the engine frame 2 and achieve a sufficient supporting force for the front working machine 100 as well.

The front frame 3 may be detachably connected to the engine frame 2. Accordingly, when the front working machine 100 is not mounted on the agricultural work vehicle 10, the front frame 3 may be detached from the engine frame 2. Therefore, the frame device 1 for agricultural work vehicle according to said embodiment not part of the present invention is implemented to reduce the total weight of the engine frame 2 by detachment of the front frame 3 when only the rear working machine 200 is mounted on the agricultural work vehicle 10. Therefore, the frame device 1 for agricultural work vehicle according to said embodiment not part of the present invention may contribute to improving the fuel economy of the agricultural work vehicle 10 and simultaneously maintaining the overall balance of the agricultural work vehicle 10. The front frame 3 may be detachably connected to the engine frame 2 and the front working machine 100 by a fastening means.

The front frame 3 may support the front working machine 100 installed so that the front working machine 100 is arranged in front of the agricultural work vehicle 10 (in a FD arrow direction). For example, the front working machine 100 may be a loader working machine used to remove or deliver soil in front of the agricultural work vehicle 10 (in a FD arrow direction). One side of the front frame 3 may be connected to the front working machine 100, and the other side of the front frame 3 may be connected to the engine frame 2. The other side of the front frame 3 may be connected to the engine frame 2 at a position at which the other side of the front frame 3 is spaced backward from the one side of the front frame 3 (in a BD arrow direction). Accordingly, the frame device 1 for agricultural work vehicle according to said embodiment not part of the present invention is implemented to disperse a load exerted by the front working machine 100 in a backward direction (a BD arrow direction) of the engine frame 2 through the other side of the front frame 3 when the front working machine 100 is mounted at the front of the agricultural work vehicle 10 (in a FD arrow direction). Therefore, the frame device 1 for agricultural work vehicle according to said embodiment not part of the present invention may contribute to maintaining the balance between the front and rear of the agricultural work vehicle 10. In this case, the front working machine 100 may be connected to one side of each of the engine frame 2 and the front frame 3. The front working machine 100 may also be connected to only the one side of the front frame 3.

The front frame 3 may be connected to each of the front working machine 100 and the engine frame 2 so that the front frame 3 is arranged at the outside of the engine frame 2. The outside of the engine frame 2 refers to an outer side of the engine frame 2 with respect to a first axial direction (a Y-axis direction) perpendicular to the traveling direction (an X-axis direction). That is, the outside of the engine frame 2 refers to a lateral side of the agricultural work vehicle 10. Accordingly, the frame device 1 for agricultural work vehicle according to said embodiment not part of the present invention may improve the ease of performing a process of connecting the front frame 3 and a process of detaching the front frame 3.

The front frame 3 may include a front support member 31.

The front support member 31 is configured to be connected to the front working machine 100. The front support member 31 may be connected to the front working machine 100 to support the front working machine 100. The front working machine 100 may be connected to each of the engine frame 2 and the front support member 31 so that the front working machine 100 may be supported by the engine frame 2 and the front frame 3. The front support member 31 may be connected to a connection member 110 of the front working machine 100 to support the front working machine 100. The connection member 110 may be formed to protrude backward from the front working machine 100 (in a BD arrow direction).

The front support member 31 may be generally formed in the form of a rectangular plate. For example, the front support member 31 may also be formed in the form of plates having other shapes as long as the front support member 31 can be connected to the front working machine 100 to support the front working machine 100.

The front support member 31 may be connected to the front working machine 100 so that the front support member 31 is arranged at the outside of the front working machine 100. The outside of the front working machine 100 refers to an outer side of the front working machine 100 with respect to the first axial direction (a Y-axis direction). That is, the outside of the front working machine 100 refers to a lateral side of the agricultural work vehicle 10. Accordingly, the frame device 1 for agricultural work vehicle according to said embodiment not part of the present invention may improve the ease of performing a process of connecting the front support member 31 to the front working machine 100 and a process of detaching the front support member 31 from the front working machine 100. In this case, the front support member 31 may be connected to the front working machine 100 so that the front support member 31 is arranged at the outside of the front working machine 100 arranged at the outside of the engine frame 2.

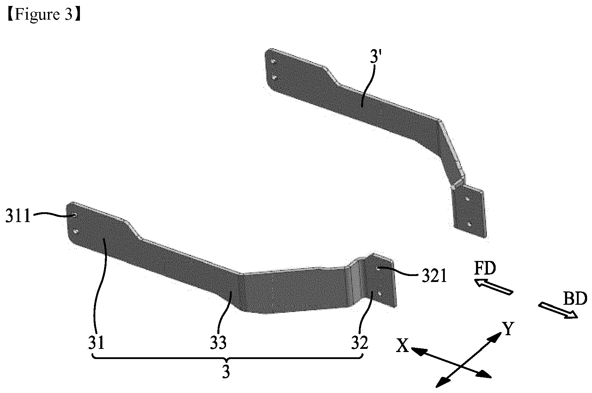

A front support hole 311 (shown in FIG. 3) may be formed in the front support member 31. The front support hole 311 may be formed through the front support member 31. In this case, a front fastening hole (not shown) corresponding to the front support hole 311 may be formed in the front working machine 100. A front fastening means (not shown) may be inserted into the front support hole 311 and the front fastening hole, and fastened therein to fix the front support member 31 in the front working machine 100. The front fastening hole may be formed in the connection member 110.

The front frame 3 may include a front connection member 32.

The front connection member 32 is connected to the engine frame 2. The front connection member 32 may be connected to the engine frame 2 to support the front working machine 100 together with the engine frame 2.

The front connection member 32 may be generally formed in the form of a rectangular plate. For example, the front connection member 32 may also be formed in the form of plates having other shapes as long as the front connection member 32 can be connected to the engine frame 2 to support the front working machine 100.

The front connection member 32 may be connected to the engine frame 2 so that the front connection member 32 is arranged at the outside of the engine frame 2. Therefore, the front connection member 32 may be disposed so that the front connection member 32 is arranged at a lateral side of the agricultural work vehicle 10. Accordingly, the frame device 1 for agricultural work vehicle according to said embodiment not part of the present invention may improve the ease of performing a process of connecting the front connection member 32 to the engine frame 2 and a process of detaching the front connection member 32 from the engine frame 2.

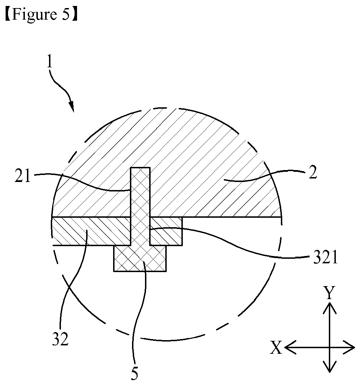

A front connection hole 321 (shown in FIG. 5) may be formed in the front connection member 32. The front connection hole 321 may be formed in the front connection member 32. In this case, a first fixing hole 21 (shown in FIG. 5) corresponding to the front connection hole 321 may be formed in the engine frame 2. A first fixing means 5 may be inserted into the front connection hole 321 and the first fixing hole 21. The first fixing means 5 may be inserted into the front connection hole 321 and the first fixing hole 21 to fix the front connection member 32 to the engine frame 2. The first fixing means 5 may also be inserted into the front connection hole 321 and the first fixing hole 21, and fastened therein to fix the front connection member 32 to the engine frame 2. In this case, screw threads may be formed in the first fixing means 5, an inner surface of the front connection member 32 in which the front connection hole 321 is formed, and an inner surface of the engine frame 2 in which the first fixing hole 21 is formed.

When the front frame 3 includes the front support member 31, the front connection member 32 may be connected to the engine frame 2 at a position at which the front connection member 32 is spaced backward from the front support member 31 (in a BD arrow direction). Accordingly, when the front working machine 100 is mounted at the front of the agricultural work vehicle 10 (in a FD arrow direction), the frame device 1 for agricultural work vehicle according to said embodiment not part of the present invention may be implemented to disperse a load exerted by the front working machine 100 in a backward direction (a BD arrow direction) of the engine frame 2 through the front connection member 32. Therefore, the frame device 1 for agricultural work vehicle according to said embodiment not part of the present invention may contribute to maintaining the balance between the front and rear of the agricultural work vehicle 10.

The front frame 3 may include a front reinforcement member 33.

The front reinforcement member 33 serves to connect the front support member 31 and the front connection member 32. The front reinforcement member 33 may be coupled to each of the front support member 31 and the front connection member 32 so that the front reinforcement member 33 is arranged between the front support member 31 and the front connection member 32. The front reinforcement member 33 is implemented to disperse a load exerted by the front working machine 100 in a backward direction (a BD arrow direction) of the engine frame 2 by transferring the load of the front working machine 100, which has been transferred through the front support member 31, to the front connection member 32. Therefore, the frame device 1 for agricultural work vehicle according to said embodiment not part of the present invention may contribute to maintaining the balance between the front and rear of the agricultural work vehicle 10. Also, the front reinforcement member 33 may enhance the rigidity of the front frame 3 by increasing the total size of the front frame 3. Therefore, the frame device 1 for agricultural work vehicle according to said embodiment not part of the present invention may use the front frame 3 to more strongly support the load exerted by the front working machine 100.

The front reinforcement member 33 may be generally formed in the form of a rectangular plate. For example, the front reinforcement member 33 may also be formed in the form of plates having other shapes as long as the front reinforcement member 33 can be configured to connect the front support member 31 and the front connection member 32. The front reinforcement member 33, the front support member 31, and the front connection member 32 may also be formed integrally. In this case, the front reinforcement member 33, the front support member 31, and the front connection member 32 may be implemented by bending a predetermined plate.

The front reinforcement member 33 may be disposed so that the front reinforcement member 33 is arranged at the outside of the engine frame 2. That is, the front reinforcement member 33 may be disposed so that the front reinforcement member 33 is arranged at a lateral side of the agricultural work vehicle 10. Accordingly, the frame device 1 for agricultural work vehicle according to said embodiment not part of the present invention may be implemented so that the front reinforcement member 33 is not interfered with or hindered while a process of connecting the front frame 3 or a process of detaching the front frame 3 is performed. Therefore, the frame device 1 for agricultural work vehicle according to said embodiment not part of the present invention may improve the ease of performing the process of connecting the front frame 3 and the process of detaching the front frame 3. The front reinforcement member 33 may be disposed so that the front reinforcement member 33 is arranged at a position at which the front reinforcement member 33 is spaced apart from the engine frame 2 in the first axial direction (a Y-axis direction).

Here, the frame device 1 for agricultural work vehicle according to said embodiment not part of the present invention may include a plurality of front frames 3. The front frames 3 and 3' (shown in FIG. 2) may be detachably connected to each of the front working machine 100 and the engine frame 2 so that the front frames 3 and 3' are arranged at the outside of the engine frame 2. In this case, the engine frame 2 may be disposed so that the engine frame 2 is arranged between the front frames 3 and 3' in the first axial direction (Y-axis direction). That is, the front frames 3 and 3' may be disposed so that the front frames 3 and 3' are arranged at both lateral sides of the agricultural work vehicle 10. Therefore, the frame device 1 for agricultural work vehicle according to said embodiment not part of the present invention may further enhance a supporting force for the load exerted by the front working machine 100 through the front frames 3 and 3', and may also improve the ease of performing a process of connecting the front frames 3 and 3' and a process of detaching the front frames 3 and 3'.

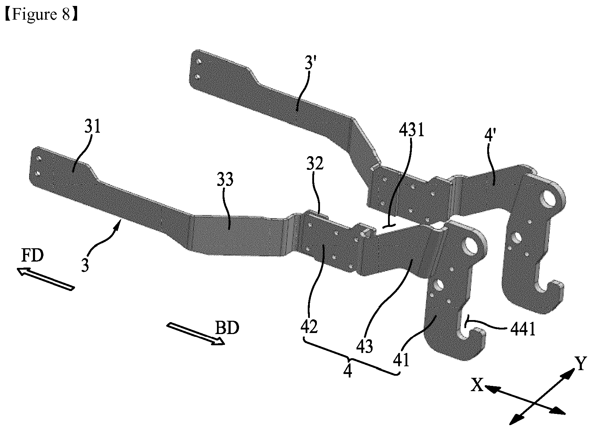

Referring to FIGS. 1 to 8, the rear frame 4 serves to support the rear working machine 200 mounted on the agricultural work vehicle 10. The rear frame 4 may be connected to each of the rear working machine 200 and the engine frame 2. Accordingly, the rear frame 4 and the engine frame 2 may share a load exerted by the rear working machine 200 in order to support the rear working machine 200. Therefore, the frame device 1 for agricultural work vehicle according to said embodiment not part of the present invention may be implemented to reduce an increase in weight of the engine frame 2 and simultaneously achieve a sufficient supporting force for the rear working machine 200.

The rear frame 4 may be detachably connected to the engine frame 2. Accordingly, when the rear working machine 200 is not mounted on the agricultural work vehicle 10, the rear frame 4 may be detached from the engine frame 2. Therefore, when only the rear working machine 200 is mounted on the agricultural work vehicle 10, the frame device 1 for agricultural work vehicle according to said embodiment not part of the present invention may be implemented to reduce the total weight of the engine frame 2 by detachment of the rear frame 4. Therefore, the frame device 1 for agricultural work vehicle according to said embodiment not part of the present invention may contribute to improving the fuel economy of the agricultural work vehicle 10 and simultaneously maintaining the overall balance of the agricultural work vehicle 10. The rear frame 4 may be detachably connected to the engine frame 2 and the rear working machine 200 by a fastening means.

The rear frame 4 may support the rear working machine 200 mounted so that the rear working machine 200 is arranged in the rear of the agricultural work vehicle 10 (in a BD arrow direction). For example, the rear working machine 200 may be a backhoe working machine used to perform an excavation process in a backward direction (a BD arrow direction) of the agricultural work vehicle 10. One side of the rear frame 4 may be connected to the rear working machine 200, and the other side of the rear frame 4 may be connected to the engine frame 2. The other side of the rear frame 4 may be connected to the engine frame 2 at a position at which the other side of the rear frame 4 is spaced forward from the one side of the rear frame 4 (in a FD arrow direction). Accordingly, when the rear working machine 200 is mounted at the rear of the agricultural work vehicle 10 (in a BD arrow direction), the frame device 1 for agricultural work vehicle according to said embodiment not part of the present invention may be implemented to disperse a load exerted by the rear working machine 200 in a forward direction (a FD arrow direction) of the engine frame 2 through the other side of the rear frame 4. Therefore, the frame device 1 for agricultural work vehicle according to said embodiment not part of the present invention may contribute to maintaining the balance between the front and rear of the agricultural work vehicle 10. In this case, the rear working machine 200 may be connected to one side of each of the engine frame 2 and the rear frame 4. The rear working machine 200 may also be connected to only the one side of the front frame 3.

When the rear frame 4 is connected to support a backhoe working machine installed so that the backhoe working machine is arranged behind the agricultural work vehicle 10 (in a BD arrow direction), the front frame 3 may be connected to support a loader working machine installed so that the loader working machine is arranged in front of the agricultural work vehicle 10 (in a FD arrow direction).

The rear frame 4 may be connected to each of the rear working machine 200 and the engine frame 2 so that the rear frame 4 is arranged at the outside of the engine frame 2. That is, the rear frame 4 may be disposed so that the rear frame 4 is arranged at a lateral side of the agricultural work vehicle 10. Accordingly, the frame device 1 for agricultural work vehicle according to said embodiment not part of the present invention may improve the ease of performing a process of connecting the rear frame 4 and a process of detaching the rear frame 4.

The rear frame 4 may include a rear support member 41.

The rear support member 41 is configured to be connected to the rear working machine 200. The rear support member 41 may be connected to the rear working machine 200 to support the rear working machine 200. The rear working machine 200 may be connected to each of the engine frame 2 and the rear support member 41 so that the rear working machine 200 is supported by the engine frame 2 and the rear frame 4.

The rear support member 41 may be generally formed in the form of a rectangular plate. For example, the rear support member 41 may also be formed in the form of plates having other shapes as long as the rear support member 41 can be connected to the rear working machine 200 to support the rear working machine 200.

The rear support member 41 may be connected to the rear working machine 200 so that the rear support member 41 is arranged at the outside of the rear working machine 200. The outside of the rear working machine 200 refers to an outer side of the rear working machine 200 with respect to the first axial direction (a Y-axis direction). That is, the outside of the rear working machine 200 refers to a lateral side of the agricultural work vehicle 10. Accordingly, the frame device 1 for agricultural work vehicle according to said embodiment not part of the present invention may improve the ease of performing a process of connecting the rear support member 41 to the rear working machine 200 and a process of detaching the rear support member 41 from the rear working machine 200. In this case, the rear support member 41 may be connected to the rear working machine 200 so that the rear support member 41 is arranged at the outside of the rear working machine 200 arranged at the outside of the engine frame 2.

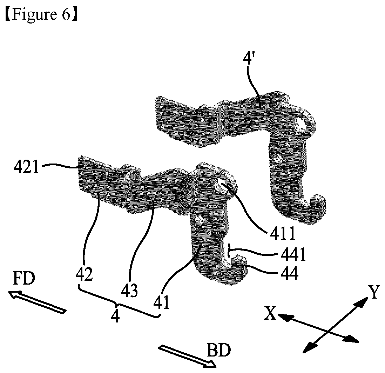

A rear support hole 411 (shown in FIG. 6) may be formed in the rear support member 41. The rear support hole 411 may be formed through the rear support member 41. In this case, a rear fastening hole (not shown) corresponding to the rear support hole 411 may be formed in the rear working machine 200. A rear fastening means (not shown) may be inserted into the rear support hole 411 and the rear fastening hole, and fastened therein to fix the rear support member 41 to the rear working machine 200.

The rear frame 4 may include a rear connection member 42.

The rear connection member 42 is connected to the engine frame 2. The rear connection member 42 may be connected to the engine frame 2 to support the rear working machine 200 together with the engine frame 2.

The rear connection member 42 may be generally formed in the form of a rectangular plate. For example, the rear connection member 42 may also be formed in the form of plates having other shapes as long as the rear connection member 42 can be connected to the engine frame 2 to support the rear working machine 200.

The rear connection member 42 may be connected to the engine frame 2 so that the rear connection member 42 is arranged at the outside of the engine frame 2. Accordingly, the rear connection member 42 may be disposed so that the rear connection member 42 is arranged at a lateral side of the agricultural work vehicle 10. Therefore, the frame device 1 for agricultural work vehicle according to said embodiment not part of the present invention may improve the ease of performing a process of connecting the rear connection member 42 to the engine frame 2 and a process of detaching the rear connection member 42 from the engine frame 2.

A rear connection hole 421 (shown in FIG. 5) may be formed in the rear connection member 42. The rear connection hole 421 may be formed through the rear connection member 42. In this case, a rear fixing hole (not shown) corresponding to the rear connection hole 421 may be formed in the engine frame 2. A rear fixing means (not shown) may be inserted into the rear connection hole 421 and the rear fixing hole. The rear fixing means may be inserted into the rear connection hole 421 and the rear fixing hole to fix the rear connection member 42 to the engine frame 2. The rear fixing means may also be inserted into the rear connection hole 421 and the rear fixing hole, and fastened therein to fix the rear connection member 42 to the engine frame 2. In this case, screw threads may be formed in the rear fixing unit, an inner surface of the rear connection member 42 in which the rear connection hole 421 is formed, and an inner surface of the engine frame 2 in which the rear fixing hole is formed.

When the rear frame 4 includes the rear support member 41, the rear connection member 42 may be connected to the engine frame 2 at a position at which the rear connection member 42 is spaced forward from the rear support member 41 (in a FD arrow direction). Accordingly, when the rear working machine 200 is mounted at the rear of the agricultural work vehicle 10 (in a BD arrow direction), the frame device 1 for agricultural work vehicle according to said embodiment not part of the present invention may be implemented to disperse a load exerted by the rear working machine 200 in a forward direction (a FD arrow direction) of the engine frame 2 through the rear connection member 42. Therefore, the frame device 1 for agricultural work vehicle according to said embodiment not part of the present invention may contribute to maintaining the balance between the front and rear of the agricultural work vehicle 10.

Referring to FIGS. 1 to 10, the rear connection member 42 and the front connection member 32 may be disposed to overlap each other so that the rear connection member 42 and the front connection member 32 are detachably connected to the engine frame 2. Accordingly, regions of the rear connection member 42 and the front connection member 32 which are connected to the engine frame 2 may be implemented as a support structure consisting of three parts. Therefore, the frame device 1 for agricultural work vehicle according to said embodiment not part of the present invention may further enhance a supporting force for the load exerted by the front working machine 100 and the rear working machine 200.

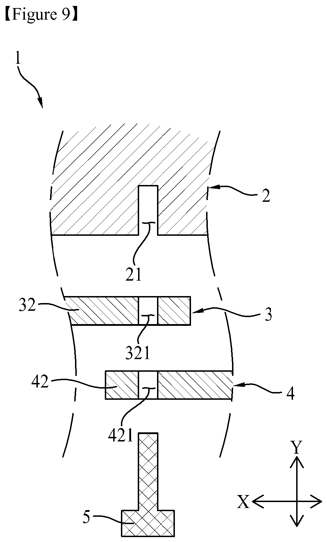

As shown in FIG. 9, the rear connection member 42 may be disposed so that the rear connection member 42 is arranged at the outside of the front connection member 32. The outside of the front connection member 32 refers to an outer side of the engine frame 2 with respect to the first axial direction (a Y-axis direction). In this case, the rear support member 41 may be connected to the rear working machine 200 whose detachment frequency with respect to the agricultural work vehicle 10 is greater than that of the front working machine 100. The detachment frequency with respect to the agricultural work vehicle 10 refers to the number of times of detachment with respect to the agricultural work vehicle 10. Therefore, the greater detachment frequency with respect to the agricultural work vehicle 10 refers to a greater number of times of detachment with respect to the agricultural work vehicle 10 within a predetermined period of time. For example, when there are not many places that require an excavation process depending on a working environment of the agricultural work vehicle 10, a backhoe working machine may be detached from the agricultural work vehicle 10 while the excavation process is not performed in the places requiring the excavation process. In this case, the rear support member 41 may be connected to the backhoe working machine, and the rear connection member 42 may be disposed so that the rear connection member 42 is arranged at the outside of the front connection member 32.

Accordingly, the rear connection member 42 may be implemented to be detached from the engine frame 2 even in a state in which the front connection member 32 is not detached from the engine frame 2. That is, the rear frame 4 may be detached from the engine frame 2 in a state in which the front frame 3 is connected to the engine frame 2. Also, the rear frame 4 may be connected to the engine frame 2 in a state in which the front frame 3 is connected to the engine frame 2.

Therefore, when the rear working machine 200 whose detachment frequency with respect to the agricultural work vehicle 10 is greater than that of the front working machine 100 is mounted and detached, the frame device 1 for agricultural work vehicle according to said embodiment not part of the present invention is implemented to mount and detach the rear working machine 200 in a state in which the front working machine 100 is mounted on the engine frame 2. Accordingly, the frame device 1 for agricultural work vehicle according to said embodiment not part of the present invention may improve the ease of performing a process of mounting and detaching the rear working machine 200. Also, the frame device 1 for agricultural work vehicle according to said embodiment not part of the present invention may shorten the time taken to perform the process of mounting and detaching the rear working machine 200, thereby enhancing an operation rate of the agricultural work vehicle 10.

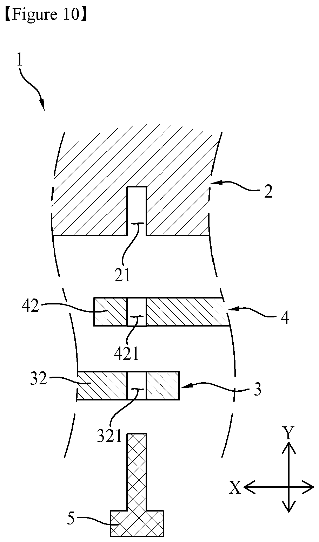

As shown in FIG. 10, the front connection member 32 may be disposed so that the front connection member 32 is arranged at the outside of the rear connection member 42. The outside of the rear connection member 42 refers to an outer side of the engine frame 2 with respect to the first axial direction (a Y-axis direction). In this case, the front support member 31 may be connected to the front working machine 100 whose detachment frequency with respect to the agricultural work vehicle 10 is greater than that of the rear working machine 200. Accordingly, the front connection member 32 may be implemented to be detached from the engine frame 2 even in a state in which the rear connection member 42 is not detached from the engine frame 2. That is, the front frame 3 may be detached from the engine frame 2 in a state in which the rear frame 4 is connected to the engine frame 2. Also, the front frame 3 may be connected to the engine frame 2 in a state in which the rear frame 4 is connected to the engine frame 2.

Accordingly, when the front working machine 100 whose detachment frequency with respect to the agricultural work vehicle 10 is greater than that of the rear working machine 200 is mounted and detached, the frame device 1 for agricultural work vehicle according to said embodiment not part of the present invention is implemented to mount and detach the front working machine 100 in a state in which the rear working machine 200 is mounted on the engine frame 2. Therefore, the frame device 1 for agricultural work vehicle according to said embodiment not part of the present invention may improve the ease of performing a process of mounting and detaching the front working machine 100. Also, the frame device 1 for agricultural work vehicle according to said embodiment not part of the present invention may shorten the time taken to perform the process of mounting and detaching the front working machine 100, thereby enhancing an operation rate of the agricultural work vehicle 10.

Referring to FIGS. 9 and 10, when the rear connection member 42 and the front connection member 32 are disposed to overlap each other, the rear connection member 42 and the front connection member 32 may be fixed to the engine frame 2 by the first fixing means 5. The first fixing means 5 may be inserted into the front connection hole 321, the rear connection hole 421, and the first fixing hole 21 to fix the front connection member 32 and the rear connection member 42 to the engine frame 2. Accordingly, the frame device 1 for agricultural work vehicle according to said embodiment not part of the present invention may improve the ease of performing a process of fixing the front connection member 32 and the rear connection member 42 to the engine frame 2. The first fixing means 5 may be inserted into the front connection hole 321, the rear connection hole 421, and the first fixing hole 21, and fastened therein to fix the front connection member 32 and the rear connection member 42 to the engine frame 2. In this case, screw threads may be formed in the first fixing means 5, an inner surface of the front connection member 32 in which the front connection hole 321 is formed, an inner surface of the rear connection member 42 in which the rear connection hole 421 is formed, and an inner surface of the engine frame 2 in which the first fixing hole 21 is formed.

Referring to FIGS. 1 to 10, the rear frame 4 may include a rear reinforcement member 43.

The rear reinforcement member 43 serves to connect the rear support member 41 and the rear connection member 42. The rear reinforcement member 43 may be coupled to each of the rear support member 41 and the rear connection member 42 so that the rear reinforcement member 43 is arranged between the rear support member 41 and the rear connection member 42. The rear reinforcement member 43 is implemented to disperse a load exerted by the rear working machine 200 in a forward direction (a FD arrow direction) of the engine frame 2 by transferring the load of the rear working machine 200, which has been transferred through the rear support member 41, to the rear connection member 42. Therefore, the frame device 1 for agricultural work vehicle according to said embodiment not part of the present invention may contribute to maintaining the balance between the front and rear of the agricultural work vehicle 10. Also, the rear reinforcement member 43 may enhance the rigidity of the rear frame 4 by increasing the total size of the rear frame 4. Therefore, the frame device 1 for agricultural work vehicle according to said embodiment not part of the present invention may use the rear frame 4 to more strongly support the load exerted by the rear working machine 200.

The rear reinforcement member 43 may be generally formed in the form of a rectangular plate. For example, the rear reinforcement member 43 may also be formed in the form of plates having other shapes as long as the rear reinforcement member 43 can be configured to connect the rear support member 41 and the rear connection member 42. The rear reinforcement member 43, the rear support member 41, and the rear connection member 42 may also be formed integrally. In this case, the rear reinforcement member 43, the rear support member 41, and the rear connection member 42 may be implemented by bending a predetermined plate.

The rear reinforcement member 43 may be disposed so that the rear reinforcement member 43 is arranged at the outside of the engine frame 2. That is, the rear reinforcement member 43 may be disposed so that the rear reinforcement member 43 is arranged at a lateral side of the agricultural work vehicle 10. Accordingly, the frame device 1 for agricultural work vehicle according to said embodiment not part of the present invention may be implemented so that the rear reinforcement member 43 is not interfered with or hindered while a process of connecting the rear frame 4 or a process of detaching the rear frame 4 are performed. Therefore, the frame device 1 for agricultural work vehicle according to said embodiment not part of the present invention may improve the ease of performing the process of connecting the rear frame 4 and the process of detaching the rear frame 4. The rear reinforcement member 43 may be disposed so that the rear reinforcement member 43 is arranged at a position at which the rear reinforcement member 43 is spaced apart from the engine frame 2 in the first axial direction (a Y-axis direction).

Referring to FIGS. 1 to 10, the rear frame 4 may include a mounting member 44 (shown in FIG. 6).

The mounting member 44 serves to support the rear working machine 200. The rear frame 4 may use the rear connection member 42 and the mounting member 44 to support different regions of the rear working machine 200. Accordingly, the frame device 1 for agricultural work vehicle according to said embodiment not part of the present invention is implemented to further enhance a supporting force for the rear working machine 200. The mounting member 44 may be formed to protrude from the rear connection member 42. When the rear working machine 200 is mounted at the rear of the agricultural work vehicle 10 (in a BD arrow direction), the mounting member 44 may be formed to protrude backward from the rear connection member 42 (in a BD arrow direction).

The mounting member 44 may include a mounting groove 441 (shown in FIG. 6).

The rear working machine 200 is configured to be inserted into the mounting groove 441. The rear working machine 200 may be inserted into the mounting groove 441 so that the rear working machine 200 is supported by the mounting member 44. The mounting member 44 may be formed in a hook shape so that the rear working machine 200 may be inserted by the mounting groove 441. For example, the mounting member 44 may be formed in other shapes as long as the mounting member 44 can be configured to support the rear working machine 200.

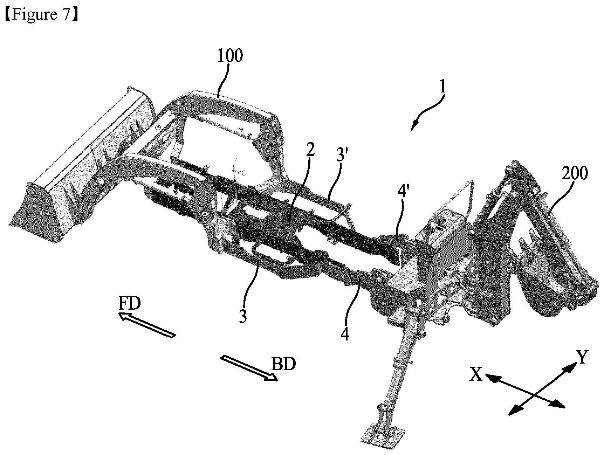

Here, the frame device 1 for agricultural work vehicle according to said embodiment not part of the present invention may include a plurality of rear frames 4. The rear frames 4 and 4' (shown in FIG. 7) may be detachably connected to each of the rear working machine 200 and the engine frame 2 so that the rear frames 4 and 4' are arranged at the outside of the engine frame 2. In this case, the engine frame 2 may be disposed so that the engine frame 2 is arranged between the rear frames 4 and 4' in the first axial direction (a Y-axis direction). That is, the rear frames 4 and 4' may be disposed so that the rear frames 4 and 4' are arranged at both lateral sides of the agricultural work vehicle 10. Therefore, the frame device 1 for agricultural work vehicle according to said embodiment not part of the present invention may further enhance a supporting force for the load exerted by the rear working machine 200 through the rear frames 4 and 4', and may also improve the ease of performing a process of connecting the rear frames 4 and 4' and a process of detaching the rear frames 4 and 4'.

Here, a frame device 1 for agricultural work vehicle according to a modified embodiment not part of the present invention may also be implemented to include only the engine frame 2 and the front frame 3. In this case, the front frame 3 may be detachably connected to each of a loader working machine and the engine frame 2 to support the loader working machine. The front frame 3 may include the front connection hole 321. Accordingly, when the rear frame 4 configured to support the backhoe working machine is optionally provided, the rear frame 4 may be connected to the engine frame 2 using the front connection hole 321.

Here, a frame device 1 for agricultural work vehicle according to another modified embodiment not part of the present invention may also be implemented to include only the engine frame 2 and the rear frame 4. In this case, the rear frame 4 may be detachably connected to each of a backhoe working machine and the engine frame 2 to support the backhoe working machine. The rear frame 4 may include the rear connection hole 421. Accordingly, when the front frame 3 configured to support the loader working machine is optionally provided, the front frame 3 may be connected to the engine frame 2 using the rear connection hole 421.

### <Embodiment of the present invention>

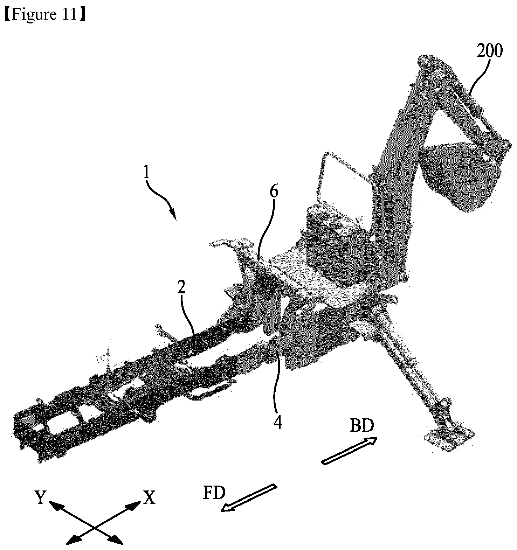

Referring to FIGS. 1, 11 and 12, a frame device 1 for agricultural work vehicle according to an embodiment of the present invention is installed in the agricultural work vehicle 10. The frame device 1 for agricultural work vehicle according to the embodiment of the present invention includes a protection frame, and may optionally include the front frame 3 (shown in FIG. 2), compared to the aforementioned embodiment which is not part of the invention. Hereinafter, in describing the frame device 1 for agricultural work vehicle according to the embodiment of the present invention, configurations of the parts which differ in comparison with the aforementioned embodiment which is not part of the invention will be described for clarity.

In addition to the engine frame 2 and the rear frame 4, the frame device 1 for agricultural work vehicle according to the embodiment of the present invention may include a protection frame 6 connected to each of a protection unit 300 configured to protect the driver's seat 13 (shown in FIG. 1) and the engine frame 2 to support the protection unit. The rear frame 4 may be detachably connected to the engine frame 2.

Accordingly, the frame device 1 for agricultural work vehicle according to the embodiment of the present invention may have the following operational effects.

First, the frame device 1 for agricultural work vehicle according to the embodiment of the present invention is implemented so that the engine frame 2, the protection frame 6 and the rear frame 4 share a load exerted by the protection unit 300 and the rear working machine 200 in order to support the protection unit 300 and the rear working machine 200. Accordingly, the frame device 1 for agricultural work vehicle according to the embodiment of the present invention may reduce deformation in the engine frame 2, and may also prevent the engine frame 2 from being damaged and broken. Therefore, the frame device 1 for agricultural work vehicle according to the embodiment of the present invention may contribute to enhancing the durability of the agricultural work vehicle 10.

Second, the frame device 1 for agricultural work vehicle according to the embodiment of the present invention is implemented to reduce a degree of increase in weight exerted on the engine frame 2 in order to achieve a supporting force for supporting the protection unit 300 and the rear working machine 200. When both the protection unit 300 and the rear working machine 200 are mounted on the agricultural work vehicle 10, the protection frame 6 and the rear frame 4 connected to the engine frame 2 share the load exerted by the protection unit 300 and the rear working machine 200 in order to support the protection unit 300 and the rear working machine 200. Also, when only the protection unit 300 is mounted on the agricultural work vehicle 10, the protection frame 6 connected to the engine frame 2 may share the load exerted by the protection unit 300 in order to support the protection unit 300. In this case, when the rear frame 4 is detached from the engine frame 2, only the protection frame 6 may be connected to the engine frame 2, as shown in FIG. 3.

Accordingly, the frame device 1 for agricultural work vehicle according to the embodiment of the present invention may provide a sufficient supporting force to support the protection unit 300 and the rear working machine 200 using the protection frame 6 and the rear frame 4 by reducing an increase in weight of the engine frame 2 or without increasing the weight of the engine frame 2. Also, when only the protection unit 300 is mounted on the agricultural work vehicle 10, the frame device 1 for agricultural work vehicle according to the embodiment of the present invention is implemented to reduce the total weight of the engine frame 2 by detachment of the rear frame 4. Therefore, the frame device 1 for agricultural work vehicle according to the embodiment of the present invention may contribute to improving the fuel economy of the agricultural work vehicle 10 by preventing the fuel economy of the agricultural work vehicle 10 from being reduced due to an unnecessary increase in the total weight of the engine frame 2.

Hereinafter, the engine frame 2, the protection frame 6, and the rear frame 4 in the frame device 1 for agricultural work vehicle according to the embodiment of the present invention will be described in detail with reference to the accompanying drawings. Configurations of the engine frame 2 and the rear frame 4 which differ in comparison with the aforementioned embodiment not part of the invention will be described for clarity.

Referring to FIGS. 1, 11 and 12, the engine frame 2 may support the protection unit 300. The engine frame 2 and the protection frame 6 may share a load exerted by the protection unit 300 in order to support the protection unit 300. The protection unit 300 serves to protect the driver's seat 13. The protection unit 300 may have a protective function of protecting a driver when the agricultural work vehicle 10 rolls over. In this case, the protection unit 300 may be disposed to protrude upward from the driver who sits in the driver's seat 13. Accordingly, the protection unit 300 is supported on the ground when the agricultural work vehicle 10 rolls over, thereby preventing the driver who sits in the driver's seat 13 from colliding with the ground. Therefore, the agricultural work vehicle 10 may have a protective function for the driver by implementing a roll over protection structure (ROPS) using the protection unit 300.

Referring to FIGS. 1, 11 to 13, the protection frame 6 serves to support the protection unit 300 mounted on the agricultural work vehicle 10. The protection frame 6 may be connected to each of the protection unit 300 and the engine frame 2. Accordingly, the protection frame 6 and the engine frame 2 may share a load exerted by the protection unit 300 in order to support the protection unit 300. Therefore, the frame device 1 for agricultural work vehicle according to the embodiment of the present invention may be implemented to reduce an increase of weight of the engine frame 2 and simultaneously achieve a sufficient supporting force for the protection unit 300. The protection unit 300 may be connected to the protection frame 6 so that the protection unit 300 is arranged at an upper side of the protection frame 6. The protection frame 6 may be connected to each of the engine frame 2 and the protection unit 300 by a fastening means. The protection frame 6 may be connected to be fixed to the engine frame 2. The protection frame 6 may also be detachably connected to the engine frame 2.

The protection frame 6 may include a protective support member 61.

The protective support member 61 is configured to be connected to the protection unit 300. The protective support member 61 may be connected to the protection unit 300 to support the protection unit 300. The protection frame 6 may be connected to the engine frame 2 so that the protective support member 61 is arranged at an upper side of the engine frame 2. The protection unit 300 may be connected to the protective support member 61 so that the protection unit 300 is arranged at an upper side of the protective support member 61. The protective support member 61 may be generally formed in the form of a rectangular plate, but the present invention is not limited thereto. For example, the protective support member 61 may also be formed in the form of plates having other shapes as long as the protective support member 61 can be connected to the protection unit 300 to support the protection unit 300. The protective support member 61 may be connected to the protection unit 300 by a fastening means.

The protection frame 6 may include a protective connection member 62.

The protective connection member 62 is configured to be connected to the engine frame 2. The protective connection member 62 may be connected to the engine frame 2 to support the protection unit 300 together with the engine frame 2. The protective connection member 62 may be generally formed in the form of a rectangular plate, but the present invention is not limited thereto. For example, the protective connection member 62 may also be formed in the form of plates having other shapes as long as the protective connection member 62 can be connected to the engine frame 2 to support the protection unit 300.

The protective connection member 62 may be connected to the engine frame 2 so that the protective connection member 62 is arranged at the outside of the engine frame 2. The outside of the engine frame 2 refers to an outer side of the engine frame 2 with respect to the first axial direction (a Y-axis direction). That is, the outside of the engine frame 2 refers to a lateral side of the agricultural work vehicle 10. Accordingly, the frame device 1 for agricultural work vehicle according to the embodiment of the present invention may improve the ease of performing a process of connecting the protective connection member 62 to the engine frame 2. When the protection frame 6 is detachably connected to the engine frame 2, the frame device 1 for agricultural work vehicle according to the embodiment of the present invention may improve the ease of performing a process of detaching the protective connection member 62 from the engine frame 2.

When the protection frame 6 includes the protective support member 61, the protective connection member 62 may be connected to the engine frame 2 at a position at which the protective connection member 62 is spaced downward from the protective support member 61. Also, the protective connection member 62 may extend forward from the protective support member 61 (in a FD arrow direction) so that the protective connection member 62 is connected to the engine frame 2. Accordingly, the frame device 1 for agricultural work vehicle according to the embodiment of the present invention is implemented to disperse a load exerted by the protection unit 300 in a forward direction (a FD arrow direction) of the engine frame 2 through the protective connection member 62. Therefore, the frame device 1 for agricultural work vehicle according to the embodiment of the present invention may contribute to maintaining the balance between the front and rear of the agricultural work vehicle 10.

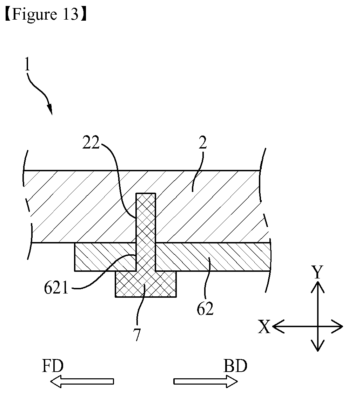

A protective connection hole 621 (shown in FIG. 13) may be formed in the protective connection member 62. The protective connection hole 621 may be formed through the protective connection member 62. In this case, a second fixing hole 22 (shown in FIG. 13) corresponding to the protective connection hole 621 may be formed in the engine frame 2. A second fixing means 7 may be inserted into the protective connection hole 621 and the second fixing hole 22. The second fixing means 7 may be inserted into the protective connection hole 621 and the second fixing hole 22 to fix the protective connection member 62 to the engine frame 2. The second fixing means 7 may be inserted into the protective connection hole 621 and the second fixing hole 22, and fastened therein to fix the protective connection member 62 to the engine frame 2. In this case, screw threads may be formed in the second fixing means 7, an inner surface of the protective connection member 62 in which the protective connection hole 621 is formed, and an inner surface of the engine frame 2 in which the second fixing hole 22 is formed.

The protection frame 6 may include a protective reinforcement member 63.

The protective reinforcement member 63 serves to connect the protective support member 61 and the protective connection member 62. The protective reinforcement member 63 may be connected to each of the protective support member 61 and the protective connection member 62 so that the protective reinforcement member 63 is arranged between the protective support member 61 and the protective connection member 62. The protective reinforcement member 63 is implemented to disperse a load exerted by the protection unit 300 in a forward direction (a FD arrow direction) of the engine frame 2 by transferring the load of the protection unit 300, which has been transferred through the protective support member 61, to the protective connection member 62. Therefore, the frame device 1 for agricultural work vehicle according to the embodiment of the present invention may contribute to maintaining the balance between the front and rear of the agricultural work vehicle 10. Also, the protective reinforcement member 63 may enhance the rigidity of the protection frame 6 by increasing the total size of the protection frame 6. Therefore, the frame device 1 for agricultural work vehicle according to the embodiment of the present invention may use the protection frame 6 to more strongly support the load exerted by the protection unit 300.

The protective reinforcement member 63 may be disposed upright in a vertical direction so that the protective reinforcement member 63 may be coupled to each of the protective support member 61 and the protective connection member 62 which are spaced apart in a vertical direction. In this case, the protective reinforcement member 63 may be disposed so that the protective reinforcement member 63 is arranged between the protective support member 61 and the protective connection member 62. The protective support member 61 may be disposed so that the protective support member 61 is arranged at upper sides of the protective reinforcement member 63 and the protective connection member 62. The protective connection member 62 may be disposed so that the protective connection member 62 is arranged at lower sides of the protective reinforcement member 63 and the protective support member 61.

The protective reinforcement member 63 may be generally formed in the form of a rectangular bar, but the present invention is not limited thereto. For example, the protective reinforcement member 63 may also be formed in other shapes such as a rectangular bar shape as long as the protective reinforcement member 63 can be configured to connect the protective support member 61 and the protective connection member 62. The protective reinforcement member 63, the protective support member 61, and the protective connection member 62 may also be formed integrally.

The protective reinforcement member 63 may be disposed so that the protective reinforcement member 63 is arranged at the outside of the engine frame 2. That is, the protective reinforcement member 63 may be disposed so that the protective reinforcement member 63 is arranged at a lateral side of the agricultural work vehicle 10. Accordingly, the frame device 1 for agricultural work vehicle according to the embodiment of the present invention may be implemented so that the protective reinforcement member 63 is not interfered with or hindered while a process of connecting the protection frame 6 is performed. Therefore, the frame device 1 for agricultural work vehicle according to the embodiment of the present invention may improve the ease of performing the process of connecting the protection frame 6. When the protection frame 6 is detachably connected to the engine frame 2, the frame device 1 for agricultural work vehicle according to the embodiment of the present invention may be implemented so that the protective reinforcement member 63 is not interfered with or hindered while a process of detaching the protection frame 6 is performed. Therefore, the frame device 1 for agricultural work vehicle according to the embodiment of the present invention may improve the ease of performing the process of detaching the protection frame 6. The protective reinforcement member 63 may be disposed so that the protective reinforcement member 63 is arranged at a position at which the protective reinforcement member 63 is spaced apart from the engine frame 2 in the first axial direction (a Y-axis direction).

Here, the protection frame 6 may include a plurality of protective connection members 62 and a plurality of protective reinforcement members 63.

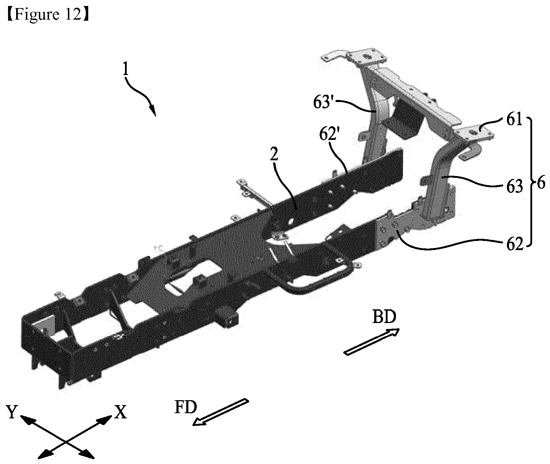

Each of the protective connection members 62 and 62' (shown in FIG. 12) may be connected to the engine frame 2 so that the protective connection members 62 and 62' are arranged at the outside of the engine frame 2. In this case, the engine frame 2 may be disposed so that the engine frame 2 is arranged between the protective connection members 62 and 62' in the first axial direction (a Y-axis direction). That is, the protective connection members 62 and 62' may be disposed so that the protective connection members 62 and 62' are arranged at both lateral sides of the agricultural work vehicle 10, respectively.

Each of the protective reinforcement members 63 and 63' (shown in FIG. 12) may be connected to the engine frame 2 so that the protective reinforcement members 63 and 63' are arranged at the outside of the engine frame 2. In this case, the engine frame 2 may be disposed so that the engine frame 2 is arranged between the protective reinforcement members 63 and 63' in the first axial direction (a Y-axis direction). That is, the protective reinforcement members 63 and 63' may be disposed so that the protective reinforcement members 63 and 63' are arranged at both lateral sides of the agricultural work vehicle 10. The protective support member 61 may be coupled to each of the protective reinforcement members 63 and 63'. In this case, the protective support member 61 may be disposed parallel with the first axial direction (a Y-axis direction).

As such, the frame device 1 for agricultural work vehicle according to the embodiment of the present invention may further enhance a supporting force for the load exerted by the protection unit 300 through the protective connection members 62 and 62' and the protective reinforcement members 63 and 63'. Therefore, the frame device 1 for agricultural work vehicle according to the embodiment of the present invention may further enhance durability of the agricultural work vehicle 10.

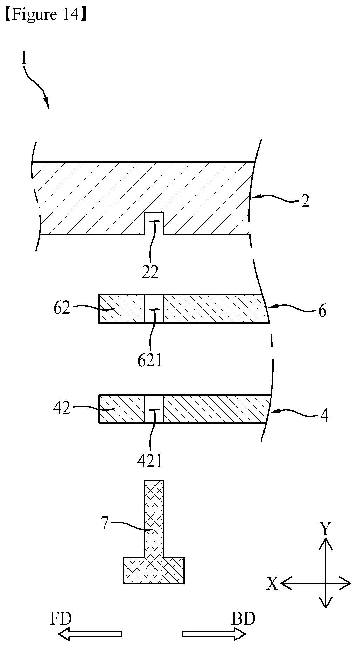

Referring to FIGS. 1, 11 to 15, the rear connection member 42 of the rear frame 4 and the protective connection member 62 of the protection frame 6 may be disposed to overlap each other so that the rear connection member 42 and the protective connection member 62 may be detachably connected to the engine frame 2. Accordingly, regions of the rear connection member 42 and the protective connection member 62 which are connected to the engine frame 2 may be implemented as a support structure consisting of three parts. Therefore, the frame device 1 for agricultural work vehicle according to the embodiment of the present invention may further enhance a supporting force for the load exerted by the protection unit 300 and the rear working machine 200.

The rear connection member 42 may be disposed so that the rear connection member 42 is arranged at the outside of the protective connection member 62. The outside of the protective connection member 62 refers to an outer side of the engine frame 2 with respect to the first axial direction (a Y-axis direction). In this case, the rear support member 41 may be connected to the rear working machine 200 whose detachment frequency with respect to the agricultural work vehicle 10 is greater than that of the protection unit 300. The detachment frequency with respect to the agricultural work vehicle 10 refers to the number of times of detachment with respect to the agricultural work vehicle 10. Therefore, the greater detachment frequency with respect to the agricultural work vehicle 10 refers to a greater number of times of detachment with respect to the agricultural work vehicle 10 within a predetermined period of time. For example, when there are not many places that require an excavation process depending on a working environment of the agricultural work vehicle 10, a backhoe working machine may be detached from the agricultural work vehicle 10 while the excavation process is not performed in the places requiring the excavation process. In this case, the rear support member 41 may be connected to the backhoe working machine, and the rear connection member 42 may be disposed so that the rear connection member 42 is arranged at the outside of the protective connection member 62.

Accordingly, the rear connection member 42 is implemented to be detached from the engine frame 2 even in a state in which the protective connection member 62 is not detached from the engine frame 2. That is, the rear frame 4 may be detached from the engine frame 2 in a state in which the protection frame 6 is connected to the engine frame 2. Also, the rear frame 4 may be connected to the engine frame 2 in a state in which the protection frame 6 is connected to the engine frame 2.

Therefore, when the rear working machine 200 whose detachment frequency with respect to the agricultural work vehicle 10 is greater than that of the protection unit 300 is mounted and detached, the frame device 1 for agricultural work vehicle according to the embodiment of the present invention is implemented to mount and detach the rear working machine 200 in a state in which the protection unit 300 is mounted on the engine frame 2. Accordingly, the frame device 1 for agricultural work vehicle according to the embodiment of the present invention may improve the ease of performing a process of mounting and detaching the rear working machine 200. Also, the frame device 1 for agricultural work vehicle according to the embodiment of the present invention may shorten the time taken to perform a process of mounting and detaching the rear working machine 200, thereby enhancing an operation rate of the agricultural work vehicle 10.

When the rear connection member 42 and the protective connection member 62 are disposed to overlap each other, the rear connection member 42 and the protective connection member 62 may be fixed to the engine frame 2 by the second fixing means 7. The second fixing means 7 may be inserted into the rear connection hole 421, the protective connection hole 621, and the second fixing hole 22 to fix the protective connection member 62 and the rear connection member 42 to the engine frame 2. Accordingly, the frame device 1 for agricultural work vehicle according to the embodiment of the present invention may improve the ease of performing a process of fixing the protective connection member 62 and the rear connection member 42 to the engine frame 2. The second fixing means 7 may be inserted into the rear connection hole 421, the protective connection hole 621, and the second fixing hole 22, and fastened therein to fix the protective connection member 62 and the rear connection member 42 to the engine frame 2. In this case, screw threads may be formed in the second fixing means 7, an inner surface of the rear connection member 42 in which the rear connection hole 421 is formed, an inner surface of the protective connection member 62 in which the protective connection hole 621 is formed, and an inner surface of the engine frame 2 in which the second fixing hole 22 is formed. Although not shown, the protective connection member 62 may also be fixed to the engine frame 2 by the second fixing means 7 and a protective fixing unit (not shown). The protective fixing unit may fix the protective connection member 62 to the engine frame 2 at a position at which the protective fixing unit is spaced apart from the rear connection member 42. Accordingly, the protection frame 6 may be maintained in a state in which the protection frame 6 is fixed to the engine frame 2 by a protective fixing means while the second fixing means 7 is removed to detach the rear frame 4.

The rear reinforcement member 43 of the rear frame 4 may be disposed so that the rear reinforcement member 43 is arranged at the outside of the protective reinforcement member 63 of the protection frame 6. The outside of the protective reinforcement member 63 refers to an outer side of the engine frame 2 with respect to the first axial direction (a Y-axis direction). Accordingly, the frame device 1 for agricultural work vehicle according to the embodiment of the present invention may be implemented so that the protective reinforcement member 63 is not interfered with or hindered while a process of connecting the rear frame 4 or a process of detaching the rear frame 4 is performed. Therefore, the frame device 1 for agricultural work vehicle according to the embodiment of the present invention may enhance the rigidity of each of the rear frame 4 and the protection frame 6 through the rear reinforcement member 43 and the protective reinforcement member 63, and may also improve the ease of performing a process of connecting the rear frame 4 and a process of detaching the rear frame 4.

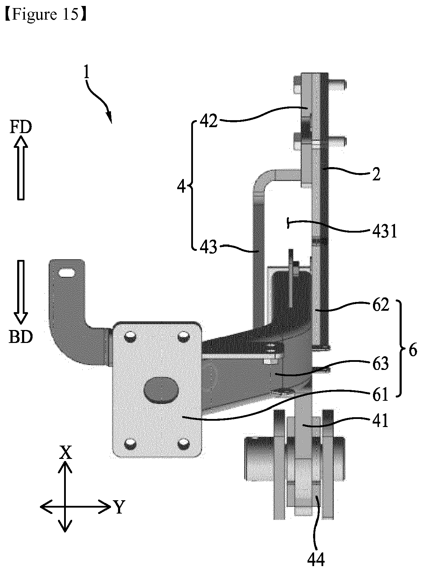

The rear reinforcement member 43 may include an avoidance groove 431 (shown in FIG. 15).

The avoidance groove 431 serves to position the protective reinforcement member 63. The rear frame 4 may be connected to the engine frame 2 so that the rear frame 4 avoids the protective reinforcement member 63 by means of the avoidance groove 431 when the rear frame 4 is connected to the engine frame 2. In this case, the rear reinforcement member 43 may be disposed so that the rear reinforcement member 43 avoids the protective reinforcement member 63 by means of the avoidance groove 431. The protective reinforcement member 63 may be positioned in the avoidance groove 431. The rear reinforcement member 43 may be disposed through the avoidance groove 431 so that the rear reinforcement member 43 is arranged at a position at which the rear reinforcement member 43 is spaced apart from the protective reinforcement member 63 in the first axial direction (a Y-axis direction). The avoidance groove 431 may be implemented by bending the rear reinforcement member 43.

Here, when the frame device 1 for agricultural work vehicle according to the embodiment of the present invention includes the plurality of rear frames 4, the rear frames 4 and 4' may be detachably connected to each of the rear working machine 200 and the engine frame 2 so that each of the rear frames 4 and 4' is arranged at the outside of the engine frame 2. The protection frame 6 may be disposed between the rear frames 4 and 4' in the first axial direction (a Y-axis direction).

The frame device 1 for agricultural work vehicle according to the embodiment of the present invention may include the front frame 3. A configuration of the front frame 3 which differs in comparison with the aforementioned embodiment not part of the invention will be described for clarity.

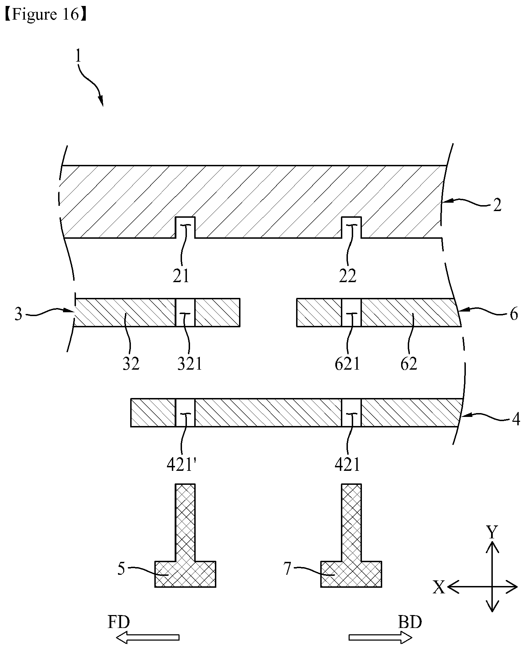

Referring to FIG. 16, the front frame 3 may be connected to the engine frame 2 at a position at which the front frame is spaced apart from the protection frame 6. In this case, the front frame 3 and the protection frame 6 may be disposed so that the front frame 3 and the protection frame 6 are spaced apart from each other in the traveling direction (an X-axis direction). Accordingly, the front frame 3 may be connected to the engine frame 2 and may be detached from the engine frame 2 without being interfered with or hindered by the protection frame 6. The rear frame 4 may include a plurality of rear connection holes 421. The rear connection holes 421 and 421' may be formed through the rear connection member 42 at a position at which the rear connection holes 421 and 421' are spaced apart from each other in the traveling direction (an X-axis direction).

The second fixing means 7 may be inserted into the rear connection hole 421 which is arranged at a relatively backward position in the backward direction (BD arrow direction) among the rear connection holes 421 and 421'. The second fixing means 7 may be inserted into the rear connection hole 421, the protective connection hole 621, and the second fixing hole 22 to fix the rear frame 4 and the protection frame 6 to the engine frame 2.

The first fixing means 5 may be inserted into the rear connection hole 421' which is arranged in at a relatively forward position in the forward direction (a FD arrow direction) among the rear connection holes 421 and 421'. The first fixing means 5 may be inserted into the rear connection hole 421', the front connection hole 321, and the first fixing hole 21 to fix the rear frame 4 and the front frame 3 to the engine frame 2.

Here, a frame device 1 for agricultural work vehicle according to a modified embodiment of the present invention may also be implemented to include only the engine frame 2 and the rear frame 4. In this case, the rear frame 4 may be detachably connected to each of the backhoe working machine and the engine frame 2 to support the backhoe working machine. The rear frame 4 may include the rear connection hole 421. Accordingly, when the protection frame 6 configured to support the protection unit 300 is provided, the rear frame 4 may be connected to the engine frame 2 using the rear connection hole 421.

Here, a frame device 1 for agricultural work vehicle according to another modified embodiment of the present invention may also be implemented to include only the engine frame 2 and the protection frame 6. In this case, the protection frame 6 may be connected to each of the protection unit 300 and the engine frame 2 to support the protection unit 300. The protection frame 6 may include the protective connection hole 621. Accordingly, when the rear frame 4 configured to support the backhoe working machine is provided, the protection frame 6 may be connected to the engine frame 2 using the protective connection hole 621.

While the exemplary embodiments of the present invention and their advantages have been described in detail with reference to the accompanying drawings, it will be apparent to those skilled in the art to which the present invention belongs that various changes, substitutions and alterations may be made herein without departing from the scope of the present invention.

## Claims

1. A frame device (1) for agricultural work vehicle (10) comprising:
an engine frame (2) configured to support an engine of an agricultural work vehicle (10);
a protection frame (6) connected to each of a protection unit (300) configured to protect a driver's seat (13) of the agricultural work vehicle (10) and the engine frame (2) to support the protection unit (300); and
a rear frame (4) connected to each of a rear working machine (200) and the engine frame (2) to support the rear working machine (200) mounted at the rear of the agricultural work vehicle (10),
wherein the protection frame (6) comprises a protective connection member (62) connected to the engine frame (2),
the rear frame (4) comprises a rear connection member (42) connected to the engine frame (2), **characterized in that**,
the protective connection member (62) and the rear connection member (42) are disposed to overlap each other so that the protective connection member (62) and the rear connection member (42) are detachably connected to the engine frame (2), and regions of the rear connection member (42) and the protective connection member (62) which are connected to the engine frame (2) are implemented as a support structure consisting of three parts.

2. The frame device (1) for agricultural work vehicle (10) of claim 1, wherein a plurality of rear frames (4) are connected to the engine frame (2), and
the rear frames (4) are detachably connected to each of the rear working machine (200) and the engine frame (2) so that the rear frames (4) are arranged at the outside of the engine frame (2).

3. The frame device (1) for agricultural work vehicle (10) of claim 1, wherein the protection frame (6) is disposed so that the protective connection member (62) is arranged at the outside of the engine frame (2), and
the rear frame (4) is disposed so that the rear connection member (42) is arranged at the outside of the engine frame (2).

4. The frame device (1) for agricultural work vehicle (10) of claim 1, wherein the rear connection member (42) is disposed so that the rear connection member (42) is arranged at the outside of the protective connection member (62).

5. The frame device (1) for agricultural work vehicle (10) of claim 1, wherein the protection frame (6) comprises a protective support member (61) to which the protection unit (300) is connected, and a protective reinforcement member (63) coupled to each of the protective support member (61) and the protective connection member (62),
the rear frame (4) comprises a rear support member (41) connected to the rear working machine (200), and a rear reinforcement member (43) coupled to each of the rear support member (41) and the rear connection member (42), and
the rear reinforcement member (43) comprises an avoidance groove (431) at which the protective reinforcement member (63) is arranged so that the rear reinforcement member (43) avoids the protective reinforcement member (63) when the rear reinforcement member (43) is connected to the engine frame (2).

6. The frame device (1) for agricultural work vehicle (10) of claim 1, further comprising a front frame (3) connected to each of a front working machine (100) and the engine frame (2) to support the front working machine (100) mounted at the front of the agricultural work vehicle (10),
wherein the front frame (3) is detachably connected to the engine frame (2).

7. The frame device (1) for agricultural work vehicle (10) of claim 6, wherein a plurality of front frames (3) are connected to the engine frame (2), and
the front frames (3) are detachably connected to each of the front working machine (100) and the engine frame (2) so that the front frames (3) are arranged at the outside of the engine frame (2).

8. The frame device (1) for agricultural work vehicle (10) of claim 6, wherein the front frame (3) comprises a front connection member (32) connected to the engine frame (2), and
the rear connection member (42) and the front connection member (32) are disposed to overlap each other so that the rear connection member (42) and the front connection member (32) are detachably connected to the engine frame (2).

9. The frame device (1) for agricultural work vehicle (10) of claim 8, wherein the rear frame (4) is disposed so that the rear connection member (42) is arranged at the outside of the engine frame (2),
the front frame (3) is disposed so that the front connection member (32) is arranged at the outside of the engine frame (2), and
the rear connection member (42) is disposed so that the rear connection member (42) is arranged at the outside of the front connection member (32).

10. The frame device (1) for agricultural work vehicle (10) of claim 6, wherein the front frame (3) comprises a front support member (31) connected to the front working machine (100), and a front connection member (32) connected to the engine frame (2) at a position at which the front connection member (32) is spaced backward from the front support member (31).

11. The frame device (1) for agricultural work vehicle (10) of claim 1, wherein the rear frame (4) comprises a rear support member (41) connected to the rear working machine (200), and
the rear connection member (42) is connected to the engine frame (2) at a position at which the rear connection member (42) is spaced forward from the rear support member (41).

12. The frame device (1) for agricultural work vehicle (10) of claim 1, wherein the rear frame (4) comprises a mounting member (44) configured to support the rear working machine (200), and
the mounting member (44) comprises a mounting groove (441) into which the rear working machine (200) is inserted.

## Patentansprüche

1. Rahmenvorrichtung (1) für ein landwirtschaftliches Arbeitsfahrzeug (10), umfassend:
einen Motorrahmen (2), der so ausgebildet ist, dass er einen Motor eines landwirtschaftlichen Arbeitsfahrzeugs (10) trägt;
einen Schutzrahmen (6), der jeweils mit einer Schutzeinheit (300), die ausgebildet ist, um einen Fahrersitz (13) des landwirtschaftlichen Arbeitsfahrzeugs (10) zu schützen, und dem Motorrahmen (2) verbunden ist, um die Schutzeinheit (300) zu tragen; und
einen hinteren Rahmen (4), der sowohl mit einer hinteren Arbeitsmaschine (200) als auch mit dem Motorrahmen (2) verbunden ist, um die hintere Arbeitsmaschine (200) zu tragen, die an der Rückseite des landwirtschaftlichen Arbeitsfahrzeugs (10) angebracht ist,
wobei der Schutzrahmen (6) ein Schutzverbindungselement (62) umfasst, das mit dem Motorrahmen (2) verbunden ist,
wobei der hintere Rahmen (4) ein hinteres Verbindungselement (42) umfasst, das mit dem Motorrahmen (2) verbunden ist, **dadurch gekennzeichnet, dass**
das schützende Verbindungselement (62) und das hintere Verbindungselement (42) derart angeordnet sind, dass sie einander überlappen, sodass das schützende Verbindungselement (62) und das hintere Verbindungselement (42) lösbar mit dem Motorrahmen (2) verbunden sind, und dass Bereiche des hinteren Verbindungselements (42) und des schützenden Verbindungselements (62), die mit dem Motorrahmen (2) verbunden sind, als eine aus drei Teilen bestehende Tragstruktur ausgeführt sind.

2. Rahmenvorrichtung (1) für ein landwirtschaftliches Arbeitsfahrzeug (10) nach Anspruch 1, wobei eine Vielzahl von hinteren Rahmen (4) mit dem Motorrahmen (2) verbunden ist, und
die hinteren Rahmen (4) lösbar derart mit sowohl der hinteren Arbeitsmaschine (200) als auch dem Motorrahmen (2) verbunden sind, dass die hinteren Rahmen (4) an der Außenseite des Motorrahmens (2) angeordnet sind.

3. Rahmenvorrichtung (1) für ein landwirtschaftliches Arbeitsfahrzeug (10) nach Anspruch 1, wobei der Schutzrahmen (6) derart angeordnet ist, dass das Schutzverbindungselement (62) an der Außenseite des Motorrahmens (2) angeordnet ist, und
der hintere Rahmen (4) derart angeordnet ist, dass das hintere Verbindungselement (42) an der Außenseite des Motorrahmens (2) angeordnet ist.

4. Rahmenvorrichtung (1) für ein landwirtschaftliches Arbeitsfahrzeug (10) nach Anspruch 1, wobei das hintere Verbindungselement (42) derart angeordnet ist, dass das hintere Verbindungselement (42) an der Außenseite des schützenden Verbindungselements (62) angeordnet ist.

5. Rahmenvorrichtung (1) für ein landwirtschaftliches Arbeitsfahrzeug (10) nach Anspruch 1, wobei der Schutzrahmen (6) ein Schutztragelement (61), mit dem die Schutzeinheit (300) verbunden ist, und ein Schutzverstärkungselement (63) umfasst, das sowohl mit dem Schutztragelement (61) als auch dem Schutzverbindungselement (62) gekoppelt ist,
der hintere Rahmen (4) ein hinteres Tragelement (41) umfasst, das mit der hinteren Arbeitsmaschine (200) verbunden ist, und ein hinteres Verstärkungselement (43), das sowohl mit dem hinteren Tragelement (41) als auch dem hinteren Verbindungselement (42) gekoppelt ist, und
das hintere Verstärkungselement (43) eine Ausweichnut (431) umfasst, an der das schützende Verstärkungselement (63) derart angeordnet ist, dass das hintere Verstärkungselement (43) dem schützenden Verstärkungselement (63) ausweicht, wenn das hintere Verstärkungselement (43) mit dem Motorrahmen (2) verbunden ist.

6. Rahmenvorrichtung (1) für ein landwirtschaftliches Arbeitsfahrzeug (10) nach Anspruch 1, ferner umfassend einen vorderen Rahmen (3), der sowohl mit einer vorderen Arbeitsmaschine (100) als auch dem Motorrahmen (2) verbunden ist, um die vordere Arbeitsmaschine (100) zu tragen, die an der Vorderseite des landwirtschaftlichen Arbeitsfahrzeugs (10) angebracht ist,
wobei der vordere Rahmen (3) lösbar mit dem Motorrahmen (2) verbunden ist.

7. Rahmenvorrichtung (1) für ein landwirtschaftliches Arbeitsfahrzeug (10) nach Anspruch 6, wobei eine Vielzahl von vorderen Rahmen (3) mit dem Motorrahmen (2) verbunden ist, und
die vorderen Rahmen (3) lösbar derart mit sowohl der vorderen Arbeitsmaschine (100) als auch dem Motorrahmen (2) verbunden sind, sodass die vorderen Rahmen (3) an der Außenseite des Motorrahmens (2) angeordnet sind.

8. Rahmenvorrichtung (1) für ein landwirtschaftliches Arbeitsfahrzeug (10) nach Anspruch 6, wobei der vordere Rahmen (3) ein vorderes Verbindungselement (32) umfasst, das mit dem Motorrahmen (2) verbunden ist, und
das hintere Verbindungselement (42) und das vordere Verbindungselement (32) angeordnet sind, dass sie einander derart überlappen, dass das hintere Verbindungselement (42) und das vordere Verbindungselement (32) lösbar mit dem Motorrahmen (2) verbunden sind.

9. Rahmenvorrichtung (1) für ein landwirtschaftliches Arbeitsfahrzeug (10) nach Anspruch 8, wobei der hintere Rahmen (4) derart angeordnet ist, dass das hintere Verbindungselement (42) an der Außenseite des Motorrahmens (2) angeordnet ist,
der vordere Rahmen (3) derart angeordnet ist, dass das vordere Verbindungselement (32) an der Außenseite des Motorrahmens (2) angeordnet ist, und
das hintere Verbindungselement (42) derart angeordnet ist, dass das hintere Verbindungselement (42) an der Außenseite des vorderen Verbindungselements (32) angeordnet ist.

10. Rahmenvorrichtung (1) für ein landwirtschaftliches Arbeitsfahrzeug (10) nach Anspruch 6, wobei der vordere Rahmen (3) ein vorderes Tragelement (31), das mit der vorderen Arbeitsmaschine (100) verbunden ist, und ein vorderes Verbindungselement (32) umfasst, das mit dem Motorrahmen (2) an einer Position verbunden ist, an der das vordere Verbindungselement (32) vom vorderen Tragelement (31) nach hinten beabstandet ist.

11. Rahmenvorrichtung (1) für ein landwirtschaftliches Arbeitsfahrzeug (10) nach Anspruch 1, wobei der hintere Rahmen (4) ein hinteres Tragelement (41) umfasst, das mit der hinteren Arbeitsmaschine (200) verbunden ist, und das hintere Verbindungselement (42) mit dem Motorrahmen (2) an einer Position verbunden ist, an der das hintere Verbindungselement (42) vom hinteren Tragelement (41) nach vorne beabstandet ist.

12. Rahmenvorrichtung (1) für ein landwirtschaftliches Arbeitsfahrzeug (10) nach Anspruch 1, wobei der hintere Rahmen (4) ein Befestigungselement (44) umfasst, das ausgebildet ist, um die hintere Arbeitsmaschine (200) zu tragen, und
das Befestigungselement (44) eine Befestigungsnut (441) umfasst, in die die hintere Arbeitsmaschine (200) eingesetzt ist.

## Revendications

1. Dispositif de châssis (1) pour véhicule de travail agricole (10) comprenant :
un châssis de moteur (2) configuré pour supporter un moteur d'un véhicule de travail agricole (10) ;
un châssis de protection (6) raccordé à chacun d'une unité de protection (300) configurée pour protéger un siège de conducteur (13) du véhicule de travail agricole (10) et du châssis de moteur (2) pour supporter l'unité de protection (300) ; et
un châssis arrière (4) raccordé à chacun d'une machine de travail arrière (200) et du châssis de moteur (2) pour supporter la machine de travail arrière (200) montée à l'arrière du véhicule de travail agricole (10),
dans lequel le châssis de protection (6) comprend un élément de raccordement protecteur (62) raccordé au châssis de moteur (2),
le châssis arrière (4) comprend un élément de raccordement arrière (42) raccordé au châssis de moteur (2), **caractérisé en ce que**,
l'élément de raccordement protecteur (62) et l'élément de raccordement arrière (42) sont disposés pour se chevaucher l'un l'autre de sorte que l'élément de raccordement protecteur (62) et l'élément de raccordement arrière (42) sont raccordés de manière détachable au châssis de moteur (2), et des régions de l'élément de raccordement arrière (42) et de l'élément de raccordement protecteur (62) qui sont raccordées au châssis de moteur (2) sont mises en œuvre sous la forme d'une structure de support constituée de trois parties.

2. Dispositif de châssis (1) pour véhicule de travail agricole (10) selon la revendication 1, dans lequel une pluralité de châssis arrière (4) sont raccordés au châssis de moteur (2), et
les châssis arrière (4) sont raccordés de manière détachable à chacun de la machine de travail arrière (200) et du châssis de moteur (2) de sorte que les châssis arrière (4) sont agencés à l'extérieur du châssis de moteur (2).

3. Dispositif de châssis (1) pour véhicule de travail agricole (10) selon la revendication 1, dans lequel le châssis de protection (6) est disposé de sorte que l'élément de raccordement protecteur (62) est agencé à l'extérieur du châssis de moteur (2), et
le châssis arrière (4) est disposé de sorte que l'élément de raccordement arrière (42) est agencé à l'extérieur du châssis de moteur (2).

4. Dispositif de châssis (1) pour véhicule de travail agricole (10) selon la revendication 1, dans lequel l'élément de raccordement arrière (42) est disposé de sorte que l'élément de raccordement arrière (42) est agencé à l'extérieur de l'élément de raccordement protecteur (62).

5. Dispositif de châssis (1) pour véhicule de travail agricole (10) selon la revendication 1, dans lequel le châssis de protection (6) comprend un élément de support protecteur (61) auquel l'unité de protection (300) est raccordée, et un élément de renfort protecteur (63) couplé à chacun de l'élément de support protecteur (61) et de l'élément de raccordement protecteur (62),
le châssis arrière (4) comprend un élément de support arrière (41) raccordé à la machine de travail arrière (200), et un élément de renfort arrière (43) couplé à chacun de l'élément de support arrière (41) et de l'élément de raccordement arrière (42), et
l'élément de renfort arrière (43) comprend une rainure d'évitement (431) au niveau de laquelle l'élément de renfort protecteur (63) est agencé de sorte que l'élément de renfort arrière (43) évite l'élément de renfort protecteur (63) lorsque l'élément de renfort arrière (43) est raccordé au châssis de moteur (2).

6. Dispositif de châssis (1) pour véhicule de travail agricole (10) selon la revendication 1, comprenant en outre un châssis avant (3) raccordé à chacun d'une machine de travail avant (100) et du châssis de moteur (2) pour supporter la machine de travail avant (100) montée à l'avant du véhicule de travail agricole
(10),
dans lequel le châssis avant (3) est raccordé de manière détachable au châssis de moteur (2).

7. Dispositif de châssis (1) pour véhicule de travail agricole (10) selon la revendication 6, dans lequel une pluralité de châssis avant (3) sont raccordés au châssis de moteur (2), et les châssis avant (3) sont raccordés de manière détachable à la machine de travail avant (100) et au châssis de moteur (2) de sorte que les châssis avant (3) sont agencés à l'extérieur du châssis de moteur (2).

8. Dispositif de châssis (1) pour véhicule de travail agricole (10) selon la revendication 6, dans lequel le châssis avant (3) comprend un élément de raccordement avant (32) raccordé au châssis de moteur (2), et
l'élément de raccordement arrière (42) et l'élément de raccordement avant (32) sont disposés pour se chevaucher l'un l'autre de sorte que l'élément de raccordement arrière (42) et l'élément de raccordement avant (32) sont raccordés de manière détachable au châssis de moteur (2).

9. Dispositif de châssis (1) pour véhicule de travail agricole (10) selon la revendication 8, dans lequel le châssis arrière (4) est disposé de sorte que l'élément de raccordement arrière (42) est agencé à l'extérieur du châssis de moteur (2),
le châssis avant (3) est disposé de sorte que l'élément de raccordement avant (32) est agencé à l'extérieur du châssis de moteur (2), et
l'élément de raccordement arrière (42) est disposé de sorte que l'élément de raccordement arrière (42) est agencé à l'extérieur de l'élément de raccordement avant (32).

10. Dispositif de châssis (1) pour véhicule de travail agricole (10) selon la revendication 6, dans lequel le châssis avant (3) comprend un élément de support avant (31) raccordé à la machine de travail avant (100), et un élément de raccordement avant (32) raccordé au châssis de moteur (2) à une position à laquelle l'élément de raccordement avant (32) est espacé vers l'arrière à partir de l'élément de support avant (31).

11. Dispositif de châssis (1) pour véhicule de travail agricole (10) selon la revendication 1, dans lequel le châssis arrière (4) comprend un élément de support arrière (41) raccordé à la machine de travail arrière (200), et
l'élément de raccordement arrière (42) est raccordé au châssis de moteur (2) à une position à laquelle l'élément de raccordement arrière (42) est espacé vers l'avant à partir de l'élément de support arrière (41).

12. Dispositif de châssis (1) pour véhicule de travail agricole (10) selon la revendication 1, dans lequel le châssis arrière (4) comprend un élément de montage (44) configuré pour supporter la machine de travail arrière (200), et
l'élément de montage (44) comprend une rainure de montage (441) dans laquelle la machine de travail arrière (200) est insérée.
